# EUROPEAN PATENT APPLICATION

(11) **EP 2 398 243 A2**
(43) Date of publication of application: **21.12.2011**
(21) Application number: 11004800.6
(22) Date of filing: 10.06.2011
(51) Int. Cl.: H04N 13/00

(54) **Method for remote user control for stereoscopic display and device thereof**

(30) Priority: 15.06.2010 US 816237
(71) Applicant: Sharp Kabushiki Kaisha, Osaka-shi, Osaka 545-8522 (JP)
(72) Inventor: Sezan, M. Ibrahim, Camas Washington 98607 (US); Yuan, Chang, Camas Washington 98607 (US); Daly, Scott J., Camas Washington 98607 (US)
(74) Representative: Müller - Hoffmann & Partner

(57) **Abstract**

A method for modifying images for display on a three dimensional display includes receiving a first image and a corresponding second image which together represent a three dimensional image when displayed on the display. Glasses suitable to be worn by a viewer of the display provide depth perception of the three dimensional image. The glasses selectively send a signal to the display indicating whether the viewer selectively observes either two dimensional or three dimensional content by the display. The glasses also selectively send a signal to the display indicating the depth strength and image brightness of the perceived images.

## Description

### BACKGROUND OF THE INVENTION

The present invention relates generally to remotely controlling stereoscopic content displayed on a display.

A liquid crystal display has a plurality of pixels each of which consists of a layer of molecules aligned between two transparent electrodes, and two polarizing filters where the axes of transmission are (in most of the cases) perpendicular to each other. The liquid crystal material twists with the application of an electric field across the two transparent electrodes, which controls the effect on the polarization of light passing through the liquid crystal material. Thus, with the two polarizing filters and controlling the amount of change in the polarization of the light, the amount of light allowed to pass through may be varied. Other types of displays include different technologies.

When displaying two-dimensional content on a two-dimensional liquid crystal display, the angle between the eyes of the viewer converge at the plane of the display. Also, when displaying two-dimensional content on a two-dimensional liquid crystal display, the eyes are focused on the plane of the display (i.e., accommodative). In this manner, the vergence and accommodative states are tightly coupled to one another. The eyes are not generally strained when the vergence and the accommodative states are tightly coupled.

One of the principal causes of observer fatigue and discomfort while viewing stereoscopic displays is due to a vergence-accommodation conflict. Vergence may be defined as the angle between the eyes' lines of sight, or optical axes. When one fixates on an object very far away, the lines of sight are nearly parallel, resulting in a very small vergence angle. When fixation is on a near object, the lines of sight converge and the vergence angle becomes large. Accommodation refers to the distance to which the eyes are focused, typically on the plane of the display. In natural viewing, the eyes' vergence and accommodative states are tightly coupled. However, this coupling is broken when one views a stereoscopic display, as seen in movie theaters and at home.

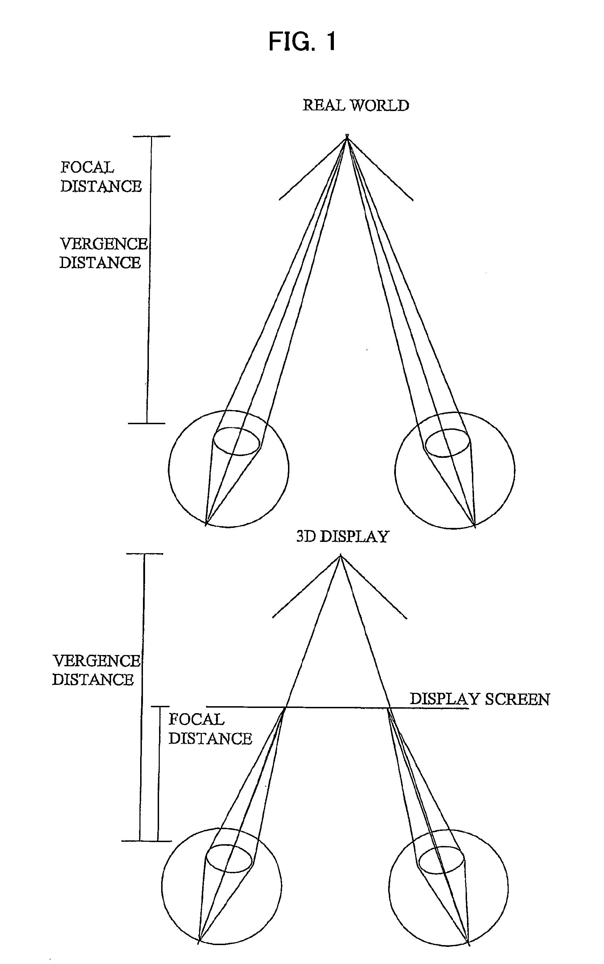

Referring to FIG. 1, with stereoscopic displays, the observer's eyes verge to various depths throughout the depicted scene while maintaining accommodation to the surface of the display. The conflict occurs because accommodation is driven by two signals—vergence and blur. If accommodation followed the vergence signal while viewing a stereo display, then in many cases the eyes would be focused to a different distance than the display, and the images would be blurred. So the observer's visual system switches to relying on the blur signal to control accommodation, ignoring the signal from vergence. This decoupling is a significant source of discomfort with stereo displays, resulting in headaches, eyestrain, and sometimes nausea.

What is desired, therefore, is a stereoscopic display system that permits the user to modify the presentation characteristics when displaying content.

### SUMMARY OF THE INVENTION

One embodiment of the present invention discloses a method for modifying images for display on a three dimensional display comprising: (a) receiving a first image and a corresponding second image which together represent a three dimensional image when displayed on said three dimensional display; (b) selectively sending a signal to said display indicating a modification of said perception of said three dimensional image from glasses suitable to be worn by a viewer of said display to provide depth perception of a three dimensional image; (c) modifying the three-dimensional perception between said first image and said second image based upon said signal.

Another embodiment of the present invention discloses a method for modifying images for display on a three dimensional display comprising: (a) receiving a first image and a corresponding second image which together represent a three dimensional image when displayed on said three dimensional display; (b) selectively sending a signal to said display from glasses suitable to be worn by a viewer to provide depth perception of a three dimensional image indicating at least one of a plurality of modes of operation including (i) a global two-dimensional mode of operation; (ii) an individual two-dimensional mode of operation; (iii) a brightness adjustable three dimensional mode of operation; and (iv) a depth adjustable three dimensional mode of operation.

Another embodiment of the present invention discloses a method for modifying images for display on a three dimensional display comprising: (a)receiving a first image and a corresponding second image which together represent a three dimensional image when displayed on said three dimensional display; (b) selectively sending a signal to said display from glasses suitable to be worn by a viewer to provide depth perception of a three dimensional image indicating whether said viewer selectively observes either two dimensional or three dimensional content by said display.

Another embodiment of the present invention discloses a device for modifying images for display on a three dimensional display comprising: (a) a receiving section to receive a first image and a corresponding second image which together represent a three dimensional image when displayed on said three dimensional display; (b) a sending section to selectively send a signal to said display indicating a modification of said perception of said three dimensional to provide depth perception of a three dimensional image; (c) a modifying section to modify the three-dimensional perception between said first image and said second image based upon said signal.

### BRIEF DESCRIPTION OF THE SEVERAL VIEWS OF THE DRAWINGS

FIG. 1 illustrates vergence and focal distance.

FIG. 2 illustrates suitable three dimensional content.

FIGS. 3A and 3B illustrate image offsets.

FIG. 4 illustrates stereoscopic glasses and a television.

FIG. 5 illustrates a mode selection technique.

FIG. 6 illustrates the control mechanism.

### DETAILED DESCRIPTION OF PREFERRED EMBODIMENT

To reduce eye discomfort, it is preferable that the contents of a stereoscopic scene are within a range of depths that would result in a reduced conflict between vergence and accommodation. This range is preferably the depth of focus of the eye, which may be around 0.66 (± 0.33) diopters (from -0.33 to +.33 range) or other suitable values. In addition, this range may depend on the particular viewer of the display. Accommodation throughout this range of depths would not result in significant detectable blurring of images. Then the blur and vergence signals to accommodation would not be in as much conflict with each other, thus reducing viewer discomfort. This range of depths may be referred to as Percival's zone of comfort (PZC) as determined by the Percival's criterion of comfortable binocular vision. In general, the zone of comfort describes fatigue, eyestrain, and/or discomfort.

In the stereo-cinema industry, general practice in the production of stereo content is moving towards a slight reduction of the conditions that cause the vergence-accommodation conflict. For instance, many studios are taking a "window-into-a-world" approach to stereo cinema, where all of the three dimensional content is placed beyond the plane of the display. This is beneficial because PZC extends further behind the display (away from the observer) than in front of it. However, some of the scenes that are considered to look the most "impressive" in stereo movies occur when objects point out from the screen toward the observer, possibly extending outside the PZC.

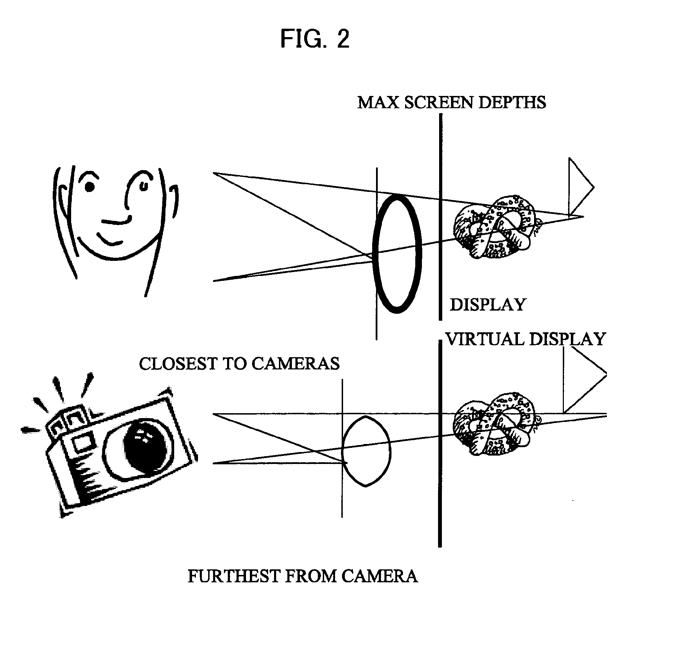

Referring to FIG. 2, it may be observed that different sets of stereoscopic content have different characteristics, that may result in fatigue. Such characteristics depend heavily on the display parameters and viewing situation, making it difficult for content providers to produce material that is guaranteed not to cause discomfort and difficult for display manufacturers to render such material in a manner guaranteed not to cause discomfort. To more accurately reduce viewer fatigue, the content may be processed to account for specific display specifications and viewing situations for the particular viewer.

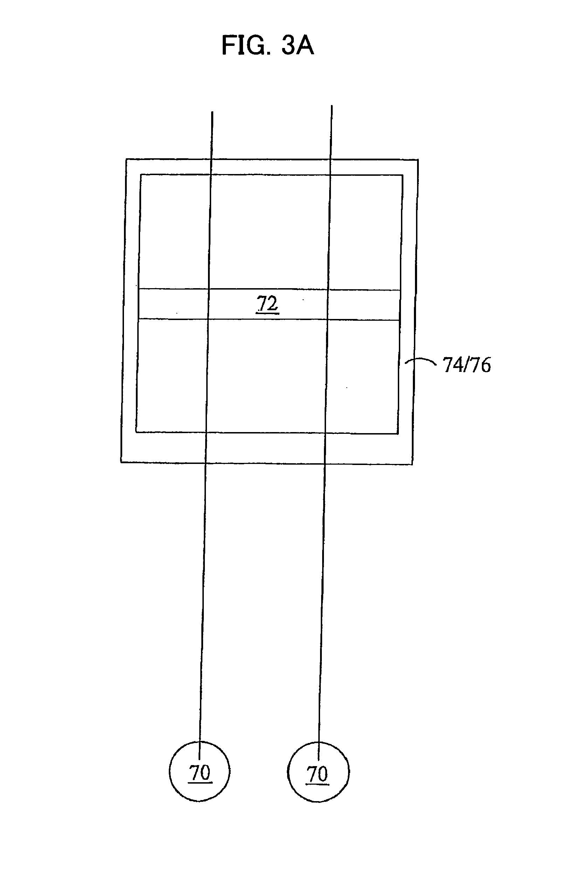

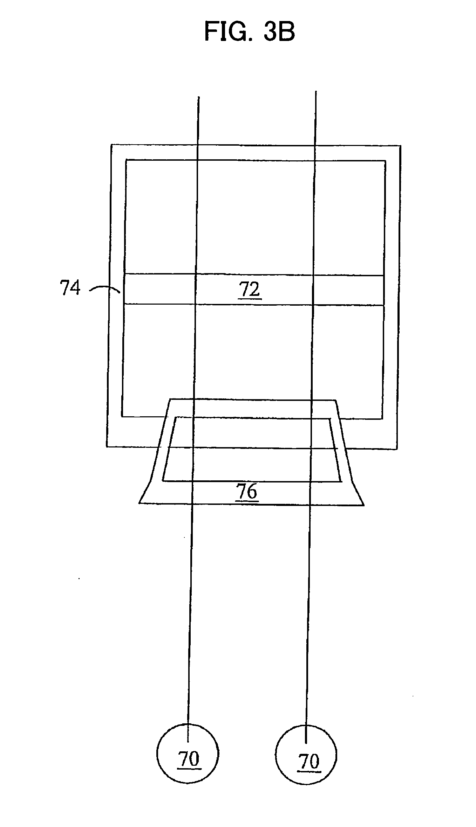

A variety of image capture, display, and viewing parameters may affect the perception of stereoscopic content. Referring to FIG. 3A and FIG. 3B, in addition lateral separation between the left and right images may also affect the perception of stereoscopic content. The eyes 70 represent an example of the viewer, the horizontal line 72 represents the display surface, the box 74 is the intended stimuli, and the tilted box 76 the predicted misperceived stimulus. In FIG. 3A, all display parameters are proper and the intended stimulus and perceived stimulus are identical. In FIG. 3B, the left image has been moved to the right and the right image has been moved to the left, causing a compression of the perceived stimulus.

Rather than attempting to require content providers to provide suitable content, it is desirable to use other techniques to permit the viewer to selectively make a reduction, or otherwise a change, in the viewer's discomfort caused by stereoscopic displays. In existing three dimensional displays using a planar display surface, specialized glasses are used to provide a three dimensional appearance. In general, the specialized glasses are either passive devices and/or active devices.

Rather than requiring the viewer to adjust the stereoscopic display parameters using a menu process in the television with a remote control, it is preferable to permit individual viewers the ability to adjust the stereoscopic properties of the display while simultaneously viewing the display. The control for adjustment of the stereoscopic properties of the display should be integrated into the glasses being worn by the viewer. In this manner, when different viewers use the glasses to watch stereoscopic content, each viewer may make adjustments suitable for his eyes and his particular viewing conditions.

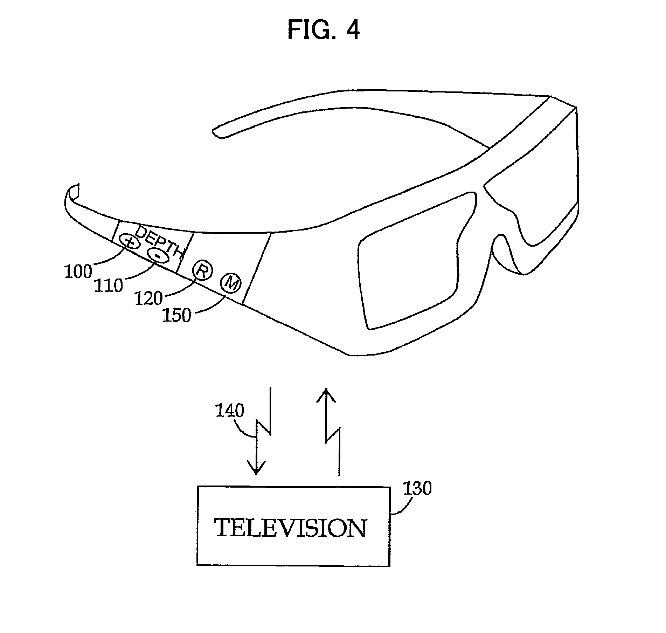

Referring to FIG. 4, one technique to permit individual adjustments is to include an adjustment mechanism with the glasses using a pair of buttons. Any other suitable selection mechanisms may likewise be used. One of the buttons 100, when depressed, increases the depth perception for the viewer. The other one of the buttons 110, when depressed, decreases the depth perception for the viewer. The glasses send a signal 140 that is received by the television 130 indicating whether to increase or decrease the depth perception. The television in turn, modifies the depth perception that is displayed on the display. In this manner, the viewer may selectively increase and/or decrease the depth perception observed which may likewise reduce the discomfort due to the vergence-accommodation conflict.

By way of example, the glasses worn by the user, when used in conjunction with a suitable display, provide the user the depth perception of a three dimensional image. In many cases, the perceived three dimensional image is the result of shuttered glasses that are synchronized to the alternative displaying of a left image and a right image on the display. Upon pressing one of the buttons 100, 110 on the glasses a signal is provided to the display indicating whether to increase or decrease the three dimensional perception for the viewer. Upon receiving the signal from the glasses, the signal may increase the disparity between the image or decrease the disparity between the images. In general, the display shifts all or part of the left and right images relative to one another.

For example, content mastered for a certain size of display for a certain viewing distance (e.g., three-dimensional movies for theatrical viewing) may require adjustment when they are displayed at conditions different than those assumed during mastering, i.e., three-dimensional movies played back at homes under living room viewing conditions on three-dimensional capable televisions. Having controls on the glasses provide direct immediate visual feedback to the viewer as the user does not need to take her eyes off the screen during the adjustment process, and the viewer does not have to otherwise look at the remote control unit buttons through the polarized (active or passive) glasses impeding the visibility.

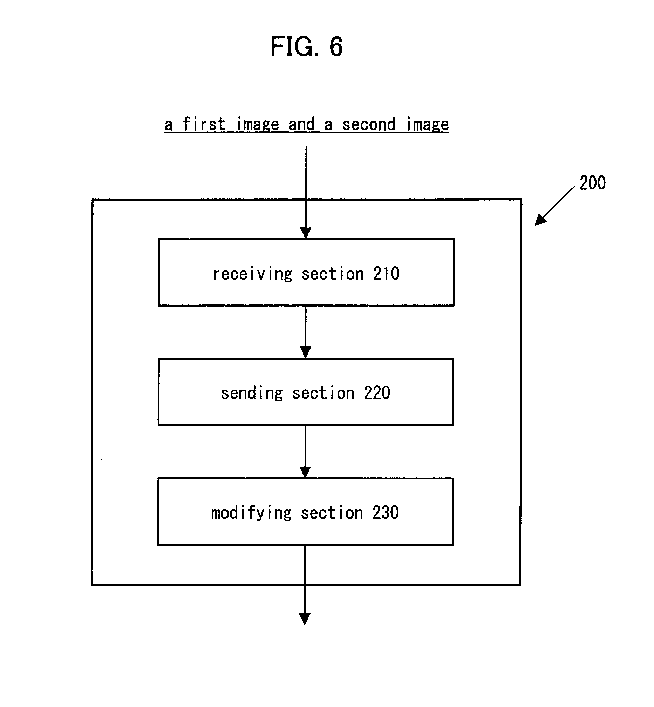

The control mechanism may be integrated with the glasses in any suitable manner. For example, the control mechanism may be clipped onto existing glasses, or integrated into the glasses themselves. In either case, the communication link between the control mechanism on the glasses and the display uses a wireless network 140, e.g., Bluetooth. Control signals from the depth control unit on the glasses activate an appropriate depth scaling operation on the television. Preferably, the control mechanism also includes a reset button 120 to cause the television to return to a default mode where no additional image processing is applied as a result of the glasses. The reset button may also be a function obtained by using the other buttons, such as depressing one or both buttons for a sufficient period of time. FIG. 4 depicts an embodiment where the user increases or decreases disparity between the right and left views by pressing (+) or (-) buttons.
Referring to Fig. 6, the control mechanism 200 which may be incorporated with the glasses in any suitable manner, may comprises (a) a receiving section 210 to receive a first image and a corresponding second image which together represent a three dimensional image when displayed on said three dimensional display; (b) a sending section 220 to selectively send a signal to said display indicating a modification of said perception of said three dimensional to provide depth perception of a three dimensional image; (c) a modifying section 230 to modify the three-dimensional perception between said first image and said second image based upon said signal.

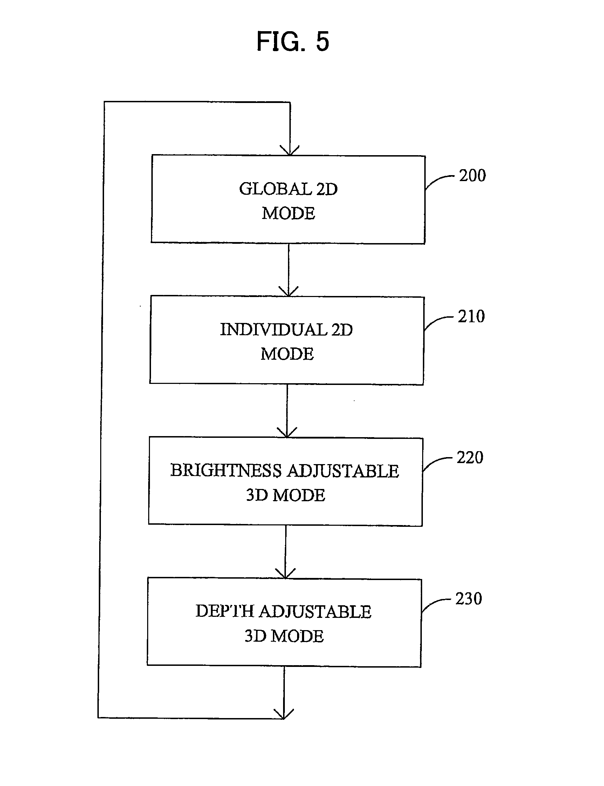

In another embodiment, a "mode" control button 150 may be included to control which viewing mode the television is in. For example, the different viewing modes may include (1) a global two-dimensional mode, (2) an individual two-dimensional mode, (3) a brightness adjustable three-dimensional mode, and (4) a depth adjustable three-dimensional mode. Referring to FIG. 5, when the viewer presses the "mode" button 150, the current viewing mode switches sequentially (or in any other manner) among all the available modes. The +/- and "reset" buttons may trigger different behaviors by the glasses and the display under the different viewing modes.

In particular, when using the global two-dimensional mode 200 all of the viewers observe two-dimensional images being displayed on the three-dimensional capable television (e.g., any display). To achieve this global two-dimensional mode of operation both of the lenses on the glasses are kept on (for active glasses) while the +/- buttons may increase and/or decrease the image brightness and the "reset" button changes the brightness to the default value. To provide global two-dimensional mode of operation only the left or right image is shown on the display, together with the desired brightness level.

In particular, when using the individual two-dimensional mode 210 one or more viewers may observe three-dimensional images, while other viewers may simultaneously observe two-dimensional images. This permits individual users to view two-dimensional image content on the three-dimensional capable display. To achieve this individual two-dimensional mode of operation, as one embodiment, only one of the lenses (left or right) is on (for active glasses) while the +/- buttons may increase and/or decrease the image brightness and the "reset" button changes the brightness to the default value. Another (and preferred) embodiment for active glasses is to turn on both lenses at the first (e.g. left eye) image and turn off both lenses at the second (e.g., right eye) image so that the viewers can only see a two-dimensional image, where "+/-" and "reset" buttons work in a similar way. To provide the individual two-dimensional mode of operation both the left and the right images are displayed on the television (alternatively for active glasses), together with the desired brightness level.

In particular, when using the brightness adjustable three-dimensional mode 220 all viewers observe three-dimensional images with a global brightness level. This permits users to adjust the brightness of the display when viewing three-dimensional content in a suitable manner. To achieve this brightness adjustable three-dimensional mode each lens is alternatively turned on (for active glasses) while the +/- buttons may increase and/or decrease the image brightness and the "reset" may change the brightness to the default level. To achieve this brightness adjustable three-dimensional mode, both the left image and the right image are shown on the television (alternatively for active glasses), together with the desired brightness level.

In particular, when using the depth adjustable three-dimensional mode 230, the glasses provide control signals to the television to adjust the depth perception. This permits users to adjust the three-dimensional effect to be more suitable for their particular viewing conditions. To achieve this, each lens is alternatively turned on (for active glasses) while the +/- buttons may increase and/or decrease the image brightness and the "reset" may change the brightness to the default level. To achieve this mode, both the left image and the right images are shown on the television (alternatively for active glasses) at the desired adjusted depth. The depth adjustment preferably occurs in the three-dimensional video signal path within the television.

One of the advantages of the two-dimensional modes is to permit viewers to continue to wear the glasses while simultaneously viewing two-dimensional content, e.g., two-dimensional commercial content interleaved between three-dimensional program content. Viewers may not desire to take off and put back on the glasses repeatedly when the content changes between three-dimensional content and two-dimensional content. Another reason a viewer may want to switch to two-dimensional viewing is for personal preference and/or comfort reasons. One cannot simply take off the glasses to see two-dimensional on a three-dimensional display, because without glasses, both eyes see both the left and right images simultaneously. This results in many double edges throughout the image, possibly causing discomfort. The global two-dimensional mode allows all viewers to switch to the two-dimensional mode, whereas the individual two-dimensional mode allows any individual viewer to switch to the two-dimensional mode while other viewers can still view the three-dimensional mode unaffected.

When viewers are watching the three-dimensional content, there are two main factors affecting their viewing experience, namely the two-dimensional image brightness and three-dimensional depth. The perceived image brightness is decreased by the glasses due to their inherent alternate blocking of the light. In the brightness adjustable three-dimensional mode, viewers can keep the depth unchanged and adjust the brightness based on their preference. If the three-dimensional depth is too strong or weak, viewers can switch to the depth adjustable mode and adjust the image depth. In these two modes, viewers' adjustment may affect others.

In another embodiment, the viewer's brightness or depth adjustment may be local to the glasses, at least in part, so that it does not affect others.

The above method can be implemented by a device which includes; (a) a receiving section to receive a first image and a corresponding second image which together represent a three dimensional image when displayed on said three dimensional display; (b) a sending section to selectively send a signal to said display indicating a modification of said perception of said three dimensional to provide depth perception of a three dimensional image; (c) a modifying section to modify the three-dimensional perception between said first image and said second image based upon said signal.

The above method can also be implemented by a device which includes ; (a) a receiving section to receive a first image and a corresponding second image which together represent a three dimensional image when displayed on said three dimensional display; (b) a sending section to selectively send a signal to said display to provide depth perception of a three dimensional image indicating at least one of a plurality of modes of operation including; (i) a global two-dimensional mode of operation; (ii) an individual two-dimensional mode of operation; (iii) a brightness adjustable three dimensional mode of operation; and (iv) a depth adjustable three dimensional mode of operation.

The above method can also be implemented by a device which includes; (a) a receiving section to receive a first image and a corresponding second image which together represent a three dimensional image when displayed on said three dimensional display; (b) a sending section to selectively send a signal to said display to provide depth perception of a three dimensional image indicating whether said viewer selectively observes either two dimensional or three dimensional content by said display.

The present invention may have the feature of a method for modifying images for display on a three dimensional display comprising: (a) receiving a first image and a corresponding second image which together represent a three dimensional image when displayed on said three dimensional display; (b) selectively sending a signal to said display from glasses suitable to be worn by a viewer to provide depth perception of a three dimensional image indicating at least one of a plurality of modes of operation including (i) a global two-dimensional mode of operation; (ii) an individual two-dimensional mode of operation; (iii) a brightness adjustable three dimensional mode of operation; and (iv) a depth adjustable three dimensional mode of operation.

The present invention may have the feature of a method wherein said global two-dimensional mode of operation includes said displaying only a first image or a second image of said three dimensional image.

The present invention may have the feature of a method wherein said individual two-dimensional mode of operation includes said glasses only allowing said first image or said second image to be viewed by said viewer

The present invention may have the feature of a method wherein said brightness adjustable three dimensional mode of operation includes selectively adjusting the brightness of said display.

The present invention may have the feature of a method wherein said depth adjustable three dimensional mode of operation include adjusting the depth perception provided by said display.

The present invention may have the feature of a method for modifying images for display on a three dimensional display comprising: (a) receiving a first image and a corresponding second image which together represent a three dimensional image when displayed on said three dimensional display; (b)selectively sending a signal to said display from glasses suitable to be worn by a viewer to provide depth perception of a three dimensional image indicating whether said viewer selectively observes either two dimensional or three dimensional content by said display.

The terms and expressions which have been employed in the foregoing specification are used therein as terms of description and not of limitation, and there is no intention, in the use of such terms and expressions, of excluding equivalents of the features shown and described or portions thereof, it being recognized that the scope of the invention is defined and limited only by the claims which follow.

## Claims

1. A method for modifying images for display on a three dimensional display comprising:
(a) receiving a first image and a corresponding second image which together represent a three dimensional image when displayed on said three dimensional display;
(b) selectively sending a signal to said display indicating a modification of said perception of said three dimensional image from glasses suitable to be worn by a viewer of said display to provide depth perception of a three dimensional image;
(c) modifying the three-dimensional perception between said first image and said second image based upon said signal.

2. The method of claim 1 wherein said modifying includes increasing the depth perception of said three dimensional image.

3. The method of claim 1 wherein said modifying includes decreasing the depth perception of said three dimensional image.

4. The method of claim 2 wherein said modifying includes increasing said depth perception by actuating a button on said glasses.

5. The method of claim 3 wherein said modifying includes decreasing said depth perception by actuating a button on said glasses.

6. The method of claim 1 wherein said modifying including resetting said depth perception by actuating a button on said glasses.

7. The method of claim 1 wherein said glasses selectively sending a signal to said display indicating a global two-dimensional mode of operation.

8. The method of claim 1 wherein said glasses selectively sending a signal to said display indicating an individual two-dimensional mode of operation.

9. The method of claim 1 wherein said glasses selectively sending a signal to said display indicating a brightness adjustable three dimensional mode of operation.

10. The method of claim 1 wherein said glasses selectively sending a signal to said display indicating a depth adjustable three dimensional mode of operation.

11. A device for modifying images for display on a three dimensional display comprising:
(a) a receiving section to receive a first image and a corresponding second image which together represent a three dimensional image when displayed on said three dimensional display;
(b) a sending section to selectively send a signal to said display indicating a modification of said perception of said three dimensional image from glasses suitable to be worn by a viewer of said display to provide depth perception of a three dimensional image;
(c) a modifying section to modify the three-dimensional perception between said first image and said second image based upon said signal.
